# EUROPEAN PATENT APPLICATION

(11) **EP 3 572 903 A1**
(43) Date of publication of application: **27.11.2019**
(21) Application number: 18305631.6
(22) Date of filing: 24.05.2018
(51) Int. Cl.: G05D 11/13

(54) **MANUFACTURING METHOD OF THERMOSET POLYMERS AND LOW-PRESSURE METERING AND MIXING MACHINE IMPLEMENTING SAID MANUFACTURING METHOD**

(71) Applicant: Covestro Deutschland AG, 51373 Leverkusen (DE)
(72) Inventor: JEANTIN, Philippe, 26300 ALIXAN (FR); THOMASSON, Hervé, 38200 SEYSSUEL (FR)
(74) Representative: Cabinet Beau de Loménie

(57) **Abstract**

The invention relates to a manufacturing method comprising a calibration step of the mass flow of each component, and a dispensing machine with integrated weighting device.
The dispensing machine guarantees a reliable flow metering.

## Description

### TECHNICAL FIELD OF THE INVENTION

The invention relates to a manufacturing method of thermoset polymers implemented by a low-pressure metering and mixing machine and preferably, a manufacturing method comprising a step of automatic calibration.

### BACKGROUND OF THE INVENTION

In general, low pressure dispensing machines for processing polyurethane or other thermoset polymers based on formulations with multiple reactive components, are conventionally also called dispensing machines, meter-mix or casting machines and are widely known.

Said dispensing machines comprise component circuits, each circuit corresponding to one component of the polymer formulation. Each component circuit is often heated to liquefy the component and to maintain the component liquid or at a desired viscosity and comprises a storage tank containing the component in a liquid form. Each component circuit can comprise a mixing head, a pump, a first hose or duct going to a three-way valve arranged at the mixing head and a second hose or duct back to the storage tank. It is advantageous to have each of the component flow permanently recirculating, going to the mixing head and back to the storage tank to get homogeneous temperature and constant flow rate.

In general, when processing chemistry includes small amount of reactive chemicals like compact polyurethane formulations (CPU), it is extremely important to adjust the flow rate of each component with precision in order to obtain the exact ratio in weight and therefore the targeted stoichiometry.

When the three-way valves open, the components are flowing into a mixing chamber and are mixed via a dynamic mixing turbine rotating at high speed and able to mix the components without introducing air. The liquid reactive mixture is then dispensed freely into the mold open-cavity or could be injected through a hose connected to the bottom of a closed mold generating then a backpressure in general below 10 bars.

In addition, pumps have internal leakages, which could be more or less severe depending upon their quality, the viscosity of pumped product and their working pressure and rotation speed. For a given viscosity, the flow rate is not linear and depends on the pressure and speed. In order to obtain an accurate and consistent flow of each of the components, a classical technique is widely used and based on manually weighing each of the components at determined time(s) to determine the mass flow rate and adjust the pumps speed. This technique is known as "calibration method" or "external calibration", as the amount of each of the components is withdrawn out of the machine.

The calibration method is often manual. The working pressure for each component is set and the operator is weighing in general at two different times the dispensed product for each component and then is keying the resulting weights onto the machine via a man-machine interface. The appropriate setting of the machine is entirely depending upon the operator, its care about the weighing operation and the scale precision. Improved apparatus using a scale linked to the machine has been proposed but the weighting operations remain done by an operator, component per component.

An alternative technology can be used, in particular when no efficient pressure control is available, said technology consists to equip each of the component circuits with a flow meter, either volumetric flowmeter or mass flowmeter in order to avoid frequent calibration and to automatically adjust the machine output during casting. Mass flow meters are often preferred as they are more robust but this technology is expensive.

### SUMMARY OF THE INVENTION

Based on the above, the aim of the invention is to provide a manufacturing method implemented automatically with an accurate precision particularly in metering step without manual operations, without being expensive.

For this purpose, the object of the invention is a manufacturing method of a thermoset polymer comprising at least two components, said manufacturing method comprising at least the following steps:
- The control unit of the dispensing machine controls the metering of each component,
- The control unit orders to at least one conveying member to convey each component in a mixing chamber of the dispensing machine,
- The control unit orders to a mixing element of the mixing chamber to mix the components metered,
- The control unit orders to a dispensing device to dispense the mixture obtained in a mold or in a container,

wherein the manufacturing method comprises at least one step of calibration of each component comprising:
a) The control unit orders to a mixing head to pour a test-quantity of component determined by initial parameters in a container arranged on a weighting device of the dispensing machine, in order to obtain an actual volume of component,
b) The weighting device of the dispensing machine weights the actual volume obtained in step a),
c) The control unit compares the actual mass of the actual volume weighted in step b) with a theoretical mass determined from the initial parameters used in step a) by using initial relation data between pump size, pump speed and gravity value determined by default during a determined pouring time,
d) The control unit determines a correction factor from the comparison in step c) and,
e) The control unit uses the correction factor obtained in step d) to modify the initial relation data in a final relation data between output flow rate and pump speed,
said calibration step being implemented for at least one measuring point defined by a set of different parameters,
wherein the metering step is implemented by controlling pump speed to obtain a desired mass flow of component, the control unit controlling the pump speed by using the final relation data obtained in step e).

Thanks to this manufacturing method and the dispensing machine of the invention, the metering step and particularly the calibration of mass flow is completely implemented automatically. Moreover, said dispensing machine of the invention guarantees a reliable calibration, free of operational or input error and is saving operator time.

According to a feature of the invention, the initial parameters can be pump speed and/or pump working pressure.

According to a feature of the invention, the calibration step can be implemented for several measuring points, preferentially for three to eight measuring points, distributed regularly or irregularly relative to the pump speed range and/or the pump working pressure. Advantageously, for each measuring point, a correction factor linked to the chosen pump speed is determined by step d) and recorded in the control unit by recording means such as a memory integrated in the control unit.

According to a feature of the invention, each measuring point is configured to cover in an optimized manner the full pump speed range and pressure range.

According to a feature of the invention, the steps a) to e) are implemented consecutively.

According to a feature of the invention, the control unit comprises a memory configured to record history of calibration steps. This feature allows quality assurance, production trouble shooting and maintenance analysis. Advantageously, the manufacturing method comprises a step g) wherein the memory of the control unit records history of final relation data for each measuring points of each component.

According to a feature of the invention, the manufacturing method comprises a step h) wherein the control unit uses the records of history of final relation data and a step i) wherein the control unit suggests indications for calibration adjustments and/or pressure adjustments depending upon records used in step h). This feature allows helping the operator to follow a rigorous process and providing an accurate and reliable process.

According to a feature of the invention, the calibration adjustments can be an evaluation of the implementing frequency of the calibration step. For example, for a determined period if the calibration step is not implemented, the control unit suggests implementing said calibration step, in order to work with accurate parameters. Advantageously, the operator can set a frequency of implementation of the calibration step.

It is another object of this invention to provide a dispensing machine for example a low-pressure metering and mixing machine, the dispensing machine being configured to manufacture thermoset polymers based on at least two different components, the dispensing machine comprising at least:
- a control unit,
- a man-machine interface connected to the control unit,
- a mixing head equipped with at least two inlets for the at least two components and an outlet and a circuit for each of the at least two components,
- a pump configured to control the flow of the components,
- a mixing chamber equipped with mixing element configured to mix the components together,
- a dispensing device configured to dispense the mixture obtained in the mixing chamber,
characterized in that the dispensing machine comprises an integrated weighting device configured to be movable from at least an inactive position, wherein said weighting device is arranged in the dispensing device, to at least one active position wherein the weighting device is protruding from the dispensing device by a translation and/or a rotation, said weighting device being positioned under the mixing head in the active position and being connected to the control unit, wherein the control unit is configured to control the weighting device.

Thanks to this dispensing machine with integrated weighting device, it is possible to collect accurate and reliable weighting value since the weighting device is connected directly to the control unit which collects weighting value relative to the mass of a weighted volume of component without call on the operator.

According to a feature of the invention, the dispensing machine of the invention is allowing implementing the manufacturing method of the invention.

According to a feature of the invention, the dispensing machine comprises a dynamic pressure regulator. The calibration processing combined with the dynamic pressure control is allowing eliminating the influence of pressure created by molding, on the pump, therefore it is possible to calibrate pump depending upon the speed in order to dispense multi-formulation, various outputs and castings methods with an outstanding precision. Thanks to the dynamic pressure regulator, only the pump speed remains in the set of parameters.

According to a feature of the invention, the dynamic pressure regulator is configured to restrict the material flow with a mobile piston having an adjustable force or biasing member such that any increase of pressure downstream will increase the restricted area such that the total pressure upstream will stay approximately constant. The dynamic pressure regulator allows the operator to add an extra working pressure larger than what he may need during various casting operations and such that any additional backpressure downstream will make the regulator to self-adjust, keeping a constant upstream working pressure for the pump. Then it is therefore possible to set the pressure to a defined sufficient level for each component, and then make a careful external calibration and corresponding output adjustment. The machine will then accurately deliver a consistent output of each component during the working period, keeping on ratio, whatever the casting method and the backpressure are.

According to a feature of the invention, the weighting device comprises an arm supporting at one extremity a weighting sensor.

According to a feature of the invention, when a container is positioned on the weighting sensor, the presence of said container is detected and the control unit receives such information to start the calibration step.

### BRIEF DESCRIPTION OF THE DRAWINGS

The invention will be better-understood thanks to the detailed specification hereinafter, which describes an embodiment of the invention as example and based on the following figures.
FIG.1 is a graphical representation of initial relation data between output flow rate and pump speed, final relation data and relation data without correction factor,
FIG.2 is a side view of the dispensing machine according to the invention,
FIG. 3 is a perspective view of the dispensing machine according to the invention.

### DETAILED DESCRIPTION

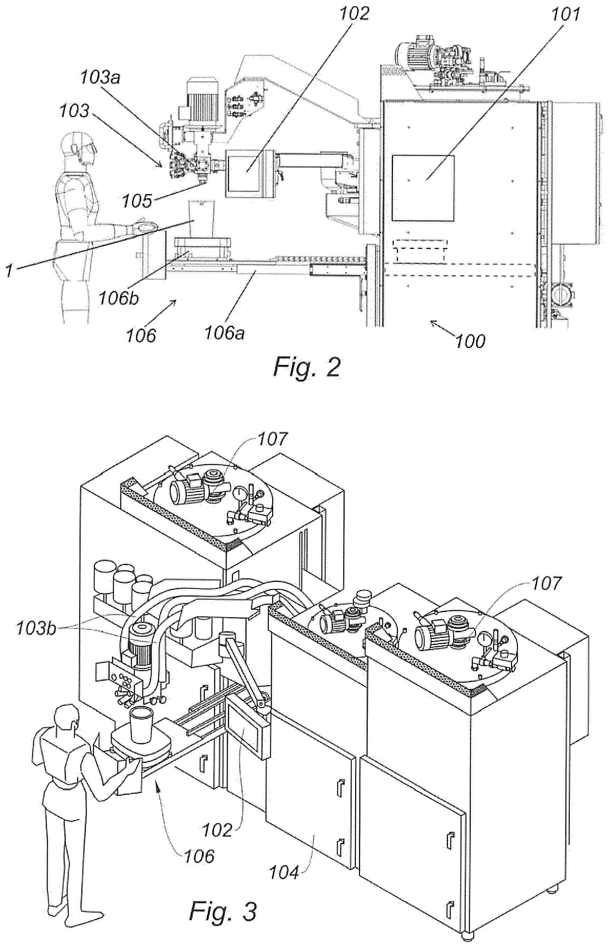

The dispensing machine 100 of the invention illustrated in FIGs2 and 3, is a low-pressure metering and mixing machine. The dispense machine 100 is configured to manufacture thermoset polymers based on at least two different components, by implementing a manufacturing method detailed herein after.

According to the invention and as illustrated in FIGs 2 and 3, the dispensing machine 100 a control unit 101, a man-machine interface 102 connected to the control unit 101. The dispensing machine 100 comprises a mixing head 103 equipped with at least two inlets 103a for the at least two components and a circuit 103b for each of the at least two components. The components are stored in containers 107. The dispensing machine 100 further comprises a pump 104 configured to control the flow of the components arriving in the mixing head 103, a mixing chamber 105 equipped with mixing element (not illustrated) configured to mix the components together, and a dispensing device (not illustrated) configured to dispense the mixture obtained in the mixing chamber 105 in a mold or a container (not illustrated).

According to the invention, the dispensing machine 100 comprises a slidably integrated weighting device 106. The weighting device 106 comprises an arm 106a at one extremity of which, a weighting sensor 106b is arranged. The weighting device 106 is configured to be movable from at least an inactive position (illustrated in dotted line in FIG.2), wherein said weighting device 106 is arranged in the dispensing device 100, to at least one active position wherein the weighting device 106 is protruding from the dispensing device 100 by a translation and/or a rotation. As shown in FIGs 2 and 3, the weighting device 106 is positioned under the mixing head 103 in the active position.

The control unit 101 is configured to control all the elements of the dispensing machine 100 such as the mixing head 103 and his inlets 103a, the pump 104, the weighting device 106, the mixing chamber 105, the man-machine interface 102.

In order to manufacture a thermoset polymer, the dispensing machine 100 implements a manufacturing method, which will be described above. First, the operator needs to select or enter the components to be calibrated. This selection or this entry can be implemented in the control unit 100 via the man-machine interface 102.

Then, the control unit 101, engages a calibration step calibration for each component. In order to do this, the control unit orders to the weighting device 106 to move into an active position or the operator move the weighting device 106 in an active position. Once the weighting device 106 in an active position, the control unit 101 orders to the mixing head 103 to pour a test-quantity of component determined by initial parameters in a container 1 arranged on a weighting device 106 of the dispensing machine 100, in order to obtain an actual volume of component, as seen in FIGS 2 and 3. This order is executed only if a container 1 is detected on the weighting device 106. When the container 1 is positioned on the weighting sensor 106b, the presence of said container 1 is detected and the control unit 101 receives such information to start the calibration step.

The test-quantity of component is poured and the weighting device 106 weights the actual volume of said test-quantity of component. The weighting device 106 sends the weight information to the control unit 101.

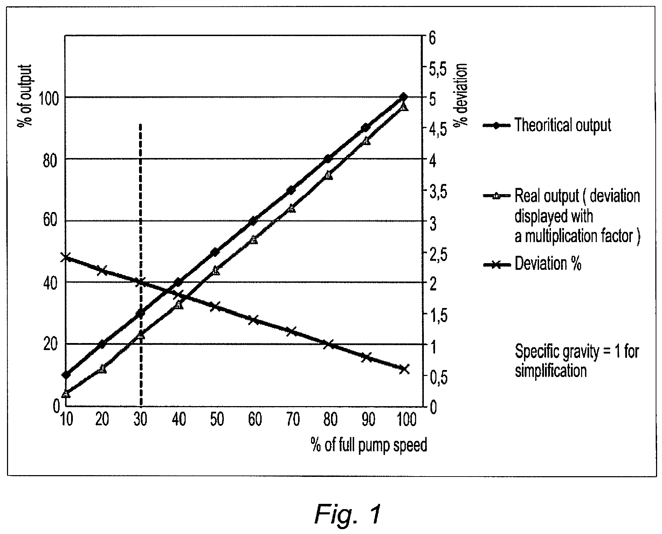

The control unit 101 compares the actual mass of the actual volume with a theoretical mass determined from the initial parameters by using initial relation data between output flow rate and pump speed. The initial relation data is illustrated in FIG. 1 via an interpolation curve represented with squared dots while the actual mass is represented with triangles. For simplification purpose in order to better display the nonlinear deviation, the deviation is shown with a multiplication factor and the determined gravity value is 1. The deviation is represented with crosses, and illustrates the difference between the real output and the theoretical output.

Then, the control unit 101 determines a correction factor at a determined pump speed for the calibration, in the graph it is at 30% of full pump speed, corresponding to the deviation, on the graph 2%.

As the deviation is not constant and may change with pump speed, for better results, the calibration step is implemented for several measuring points defined by a set of different pump speeds. For each zone of the pump speed range, the control unit will be able to meter the component taking into account the appropriate correction factor to deliver the mass flow rate and the amount of product according to the formulation of the component.

When all measuring points of a component is calibrated, depending upon the operator's choice the control unit may engages the same calibration procedure for the other(s) component(s).

Then, the control unit orders to at least one conveying member to convey each component in a mixing chamber 105 of the dispensing machine 100 and to a mixing element of the mixing chamber 105 to mix the components metered. Finally, the mixture obtained is dispensed or injected in a mold or in a container.

Obviously, the invention is not limited to the embodiments described and represented with the annexed drawings. Modifications remain possible, in particular from the point of view of the constitution of the each element or by substitution of technical equivalents, without leaving for all that the scope of the invention.

## Claims

1. Manufacturing method of a thermoset polymer comprising at least two components, said manufacturing method comprising at least the following steps:
- The control unit of the dispensing machine controls the metering of each component,
- The control unit orders to at least one conveying member to convey each component in a mixing chamber of the dispensing machine,
- The control unit orders to a mixing element of the mixing chamber to mix the components metered,
- The control unit orders to a dispensing device to dispense the mixture obtained in a mold or in a container,
wherein the manufacturing method comprises at least one step of calibration of each component comprising:
a) The control unit orders to a mixing head to pour a test-quantity of component determined by initial parameters in a container arranged on a weighting device of the dispensing machine, in order to obtain an actual volume of component,
b) The weighting device of the dispensing machine weights the actual volume obtained in step a),
c) The control unit compares the actual mass of the actual volume weighted in step b) with a theoretical mass determined from the initial parameters used in step a) by using initial relation data between pump size, pump speed and gravity value determined by default during a determined pouring time,
d) The control unit determines a correction factor from the comparison in step c) and,
e) The control unit uses the correction factor obtained in step d) to modify the initial relation data in a final relation data between output flow rate and pump speed,
said calibration step being implemented for at least one measuring point defined by a set of different parameters,
wherein the metering step is implemented by controlling pump speed to obtain a desired mass flow of component, the control unit controlling the pump speed by using the final relation data obtained in step e).

2. Manufacturing method according to claim 1, wherein the initial parameters can be pump speed and/or pouring time and/or pressure pump.

3. Manufacturing method according to claim 1 or 2, wherein the calibration step can be implemented for several measuring points.

4. Manufacturing method according to any of the claims 1 to 3, wherein the steps a) to e) are implemented consecutively.

5. Manufacturing method according to any of the claims 1 to 4, comprising a step g) wherein the control unit comprises a memory, which records history of final relation data for each component.

6. Manufacturing method according to claim 5, comprising a step h) wherein the control unit uses the records of history of final relation data to recognize components already calibrated and a step i) wherein the control unit suggests indications for calibration adjustments and/or pressure adjustments depending upon records used in step h).

7. Dispensing machine for example a low-pressure metering and mixing machine, the dispensing machine being configured to manufacture thermoset polymers based on at least two different components, the dispensing machine comprising at least:
- a control unit,
- a man-machine interface connected to the control unit,
- a mixing head equipped with at least two inlets for the at least two components and an outlet and a circuit for each of the at least two components,
- a pump configured to control the flow of the components,
- a mixing chamber equipped with mixing element configured to mix the components together,
- a dispensing device configured to dispense the mixture obtained in the mixing chamber,
**characterized in that** the dispensing machine comprises an integrated weighting device configured to be movable from at least an inactive position, wherein said weighting device is arranged in the dispensing device, to at least one active position wherein the weighting device is protruding from the dispensing device by a translation and/or a rotation, said weighting device being positioned under the mixing head in the active position and being connected to the control unit, wherein the control unit is configured to control the weighting device.

8. Dispensing machine according to claim 7, configured to implement the manufacturing method according to claims 1 to 6.

9. Dispensing machine according to any of the claims 7 to 8, comprising a dynamic pressure regulator.
